# EUROPEAN PATENT APPLICATION

(11) **EP 3 719 475 A1**
(43) Date of publication of application: **07.10.2020**
(21) Application number: 19166598.3
(22) Date of filing: 01.04.2019
(51) Int. Cl.: G01M 5/00

(54) **METHOD AND APPARATUS FOR PERFORMING MEASUREMENTS AND MONITORING OF AN OBJECT**

(71) Applicant: Siemens Gamesa Renewable Energy A/S, 7330 Brande (DK)
(72) Inventor: Nagel, Eirik, 24939 Flensburg (DE); Nieuwenhuizen, John, 8700 Horsens (DK)
(74) Representative: Aspacher, Karl-Georg

(57) **Abstract**

A measurement and monitoring device (10) comprises:
at least one leaky feeder (20),
at least one electromagnetic transmitter (30) connected to the least one leaky feeder (20) for transmitting a first electromagnetic signal (100) towards a target object (12),
at least one electromagnetic receiver (40) connected to the least one leaky feeder (20) for a second electromagnetic signal (200) reflected from the target object when the first electromagnetic signal (100) hits the target object (12),
a hardware circuit (400) including:
a processing unit (300) for determining properties of the target object (12),
a signal processing module (315) receiving as input the first electromagnetic signal (100) and/or the second electromagnetic signal (200) for generating a spectral information in the frequency and/or time domain of the first electromagnetic signal (100) and/or the second electromagnetic signal (200),
a storage unit (310) connected to the processing unit (300).

## Description

### Field of invention

The present invention relates to a method and an apparatus for performing measurements and monitoring of an object. Particularly, but not exclusively, the present invention may be used for monitoring a blade of a wind turbine.

### Art Background

In the above defined technical field, devices are known, which may be used for performing long time measurements of a wind turbine blade. Purpose of such measurement is to monitor the blade and identifies faults or damages, which could be caused, for example, by lighting or hitting of birds.

It is for example known to use drones or helicopters for inspection the blades of a wind turbine. Using rope systems to access and inspect the inside and the outside surfaces of blades are also known. May inconvenience of these methodologies is the fact that they require stopping the turbine and consequently stopping the energy production.

### Summary of the Invention

Scope of the present invention is to provide a simple, efficient and cost effective method and an apparatus for performing measurements and monitoring of a wind turbine blade, by solving the inconveniences mentioned with reference to the above cited prior art.

A further scope is that of allowing measurements and monitoring of objects in general, which may not include wind turbine components.

This scope is met by the subject matter according to the independent claims. Advantageous embodiments of the present invention are described by the dependent claims.

According to a first aspect of the present invention a measurement and monitoring device is provided, comprising:
at least one leaky feeder,
at least one electromagnetic transmitter connected to the least one leaky feeder for transmitting a first electromagnetic signal along the least one leaky feeder towards a target object,
at least one electromagnetic receiver connected to the least one leaky feeder for receiving from the at least one leaky feeder a second electromagnetic signal, said second electromagnetic signal being reflected from the target object when the first electromagnetic signal hits the target object,
a hardware circuit including:
   a processing unit connected to the electromagnetic transmitter and the electromagnetic receiver and configured to analyse said first electromagnetic signal and said second electromagnetic signal for determining properties of the target object,
   a signal processing module receiving as input the first electromagnetic signal and/or the second electromagnetic signal for generating a spectral information in the frequency domain and/or the time domain of the first electromagnetic signal and/or the second electromagnetic signal,
   a storage unit connected to the processing unit.

According to a second aspect of the present invention Method for monitoring a blade of a wind turbine, the method comprising the steps of:
providing at least one leaky feeder in an area comprising a wind turbine,
transmitting a first electromagnetic signal along the at least one leaky feeder towards the blade,
measuring a second electromagnetic signal received from the at least one leaky feeder, said second electromagnetic signal being reflected from the target object when the first electromagnetic signal impinges the blade,
generating a spectral and/or amplitude information in the frequency and/or the time domain of any of the first electromagnetic signal and the second electromagnetic signal,
storing the spectral and/or amplitude information, monitoring the spectral information over time and associating deviations in the spectral and/or amplitude information to changes in properties of the blade.

Structural properties of the blade, for example the presence of cracks, may be identified according to embodiments of the present invention.

The measurement and monitoring device of the present invention allows monitoring a blade of a wind turbine without stopping the wind turbine and the energy production, thus determining an improvement in the efficiency of the wind turbine.

The measurement and monitoring device of the present invention may be advantageously implemented in security scanners and magnetic resonance imaging apparatuses. This may solve a known inconvenience of security scanners and magnetic resonance imaging apparatuses, which cannot properly work when metallic objects are present inside a human body.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic section of a wind turbine including embodiments of the present invention.
Fig. 2 shows a schematic view of a measurement and monitoring device according to a first exemplary embodiment of the present invention.
Fig. 3 shows another schematic view of a measurement and monitoring device of figure 2 associated to a wind turbine.
Fig. 4 shows a schematic view of a measurement and monitoring device device according to a second exemplary embodiment of the present invention.
Fig. 5 shows a schematic view of a measurement and monitoring device according to a third exemplary embodiment of the present invention.
Fig. 6 shows a schematic view of a hardware circuit included in the wind turbine of figure 1.
Fig. 7 shows a schematic view of a hardware circuit included in the wind turbine of figure 1.
Fig. 8 shows a schematic view of a measurement and monitoring device according to a fourth exemplary embodiment of the present invention.
Fig. 9 shows a schematic view of a hardware circuit for managing the fourth exemplary embodiment of figure 8.

### Detailed Description

The illustrations in the drawings are schematically. It is noted that in different figures, similar or identical elements are provided with the same reference signs.

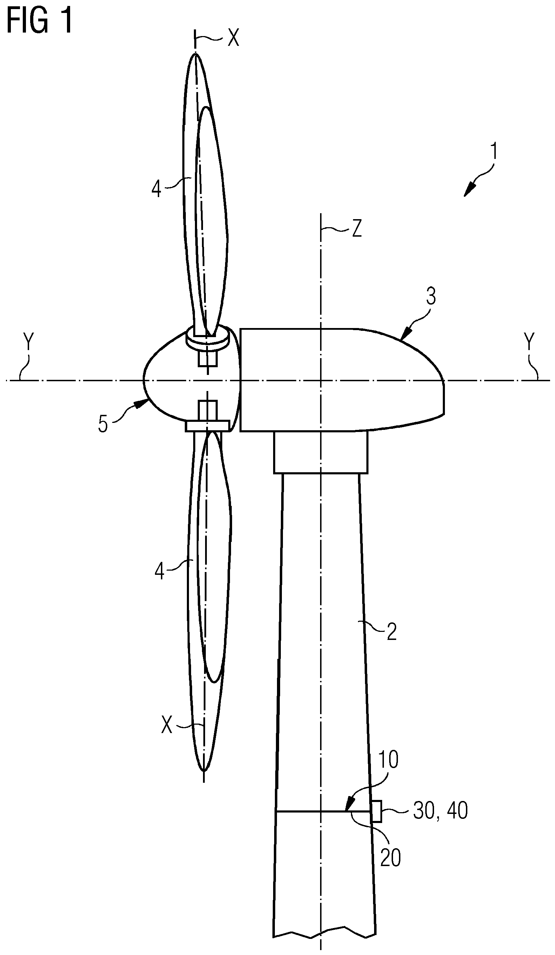

**Figure 1** shows a partial cross-sectional view of a wind turbine 1 including a measurement and monitoring device 10 according to the invention.
The wind turbine 1 comprises a tower 2, which is mounted on a non-depicted fundament. A nacelle 3 is arranged on top of the tower 2. In between the tower 2 and the nacelle 3 a yaw angle adjustment device (not shown) is provided, which is capable of rotating the nacelle around a vertical yaw axis Z.
The wind turbine 1 further comprises a wind rotor 5 having one or more rotational blades 4 (in the perspective of Figure 1 only two blades 4 are visible). The wind rotor 5 is rotatable around a rotational axis Y to transfer the rotational energy to the electrical generator of the nacelle 3. The generation of electrical power through the present invention is not a specific object of the present invention and therefore not described in further detail. In general, when not differently specified, the terms axial, radial and circumferential in the following are made with reference to the rotational axis Y. The blades 4 extend radially with respect to the rotational axis Y. Each rotor blade 4 is mounted pivotable to wind rotor 5, in order to be pitched about respective pitch axes X. This improves the control of the wind turbine land in particular of the rotor blades 4 by the possibility of modifying the direction at which the wind is hitting the rotor blades 4.

The measurement and monitoring device 10 according to the present invention comprises:
at least one leaky feeder 20,
at least one electromagnetic transmitter 30 connected to the least one leaky feeder 20,
at least one electromagnetic receiver 40 connected to the least one leaky feeder 20,
at least one final resistance 50 or termination connected to the least one leaky feeder 20,
a processing unit 300 connected to the electromagnetic transmitter 30 and the electromagnetic receiver 40.

The leaky feeder 20 is a communications elongated component, which leaks an electromagnetic wave which is transmitted along the component. The leaky feeder 20 may be constituted by a leaky coaxial cable or a leaky waveguide or a leaky stripline. The leaky feeder is connected to an electromagnetic transmitter 30 in order to transmit a first electromagnetic signal 100 along the leaky feeder 20 towards a target object. The leaky feeder 20 comprises a plurality of slots to allow the first electromagnetic signal 100 to leak out of the leaky feeder 20 along its entire length towards the target object. The slots may be, according to possible embodiments, regularly distributed along the length of the leaky feeder 20.

According to other possible embodiments of the present invention, the leaky feeder 20 is a normal coaxial cable with low optical coverage of the outside conductor (mesh or slots/apertures), which also leaks electromagnetic waves. The leaky feeder 20 may be provided with a heating system (not shown) in case severe over icing conditions are possible. Heating may be provided by air flowing between in and outside conductor or by electrical current which runs in inner or outer conductor of leaky feeder. The first electromagnetic signal 100 may be, according to possible embodiments, a radar signal or an ultrasonic signal. In cases where the first electromagnetic signal 100 is a radar signal or an ultrasonic signal the leaky feeder 20 is preferably configured as a coaxial leaky cable.

According to other embodiments, particularly where the first electromagnetic signal 100 is of higher frequency, the leaky feeder 20 is preferably configured as a leaky waveguide. In general, according to the different embodiments of the present invention, the first electromagnetic signal 100 may be of any frequency, provided that it can be transmitted to the target object and be reflected by the target object. When the first electromagnetic signal 100 impinges the target object, a reflected second electromagnetic signal 200 is transmitted towards the leaky feeder. The plurality of slots of the leaky feeder 20 allow the second electromagnetic signal 200 to leak into the leaky feeder 20 towards the electromagnetic receiver 40.

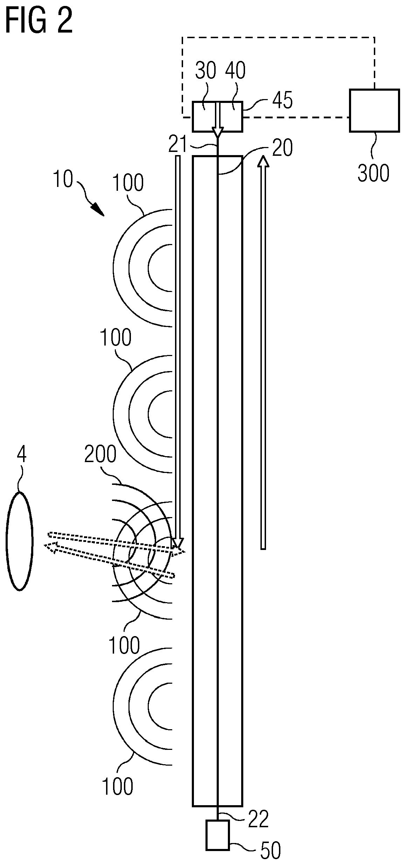

As shown in **Figure 2****,** a first embodiment of the measurement and monitoring device 10 comprises only one leaky feeder 20. The leaky feeder 20 extends between a first end 21 and a second end 22. The first end 21 is connected to an electromagnetic transceiver 45 comprising one electromagnetic transmitter 30 and one electromagnetic receiver 40. The second end 22 is connected to one final resistance 50. The measurement and monitoring device 10 is used for detecting properties of at least a rotational blade 4 of the wind turbine 1. According to the present invention, each rotational blade 4 of the wind turbine 1 can be monitored separately.

According to embodiments of the present invention, the electromagnetic transmitter 30 and the electromagnetic receiver 40 may be both connected to the first end 21 or to the second end 22 via a signal splitter or y-adapter. According to other embodiments of the present invention, the electromagnetic transmitter 30 is connected to the first end 21 and the electromagnetic receiver 40 is connected to the second end 22. The leaky feeder 20 must not connected directly to the electromagnetic transmitter 30 and to the electromagnetic receiver 40, e.g. a non-leaky feeder cable (i.e. a normal coaxial cable) may be interposed between the leaky feeder 20 and the electromagnetic transmitter 30 and/or the electromagnetic receiver 40. A normal coaxial cable may be connected directly to the electromagnetic transmitter 30 and to the electromagnetic receiver 40 or it may be used for interconnection. According to embodiments of the present invention, the target object is the nacelle 2 for the detection of the position of the nacelle about the vertical yaw axis Z. According to embodiments of the present invention, other target objects may be detected in an area comprising a wind turbine 1, for example animals or intruders or changing waves (in offshore applications). The leaky feeder 20 of figure 2 is geometrically configured as a rectilinear line. According to other embodiments of the present invention, the leaky feeder 20 may be geometrically configured as an arc.

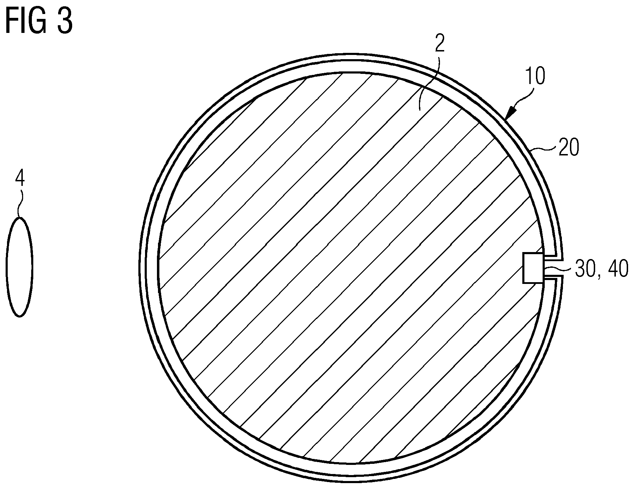

With reference to **Figure 3****,** the leaky feeder 20 is geometrically configured as a circular loop surrounding the tower 2. According to other embodiments of the present invention, any other geometrical configuration is possible, provided that the first electromagnetic signal 100 can be transmitted towards the target object and the second electromagnetic signal 200 can be reflected by the target object towards the leaky feeder 20. The leaky feeder 20 the electromagnetic transmitter 30 and the electromagnetic receiver 40 are installed on the tower 2. According to other embodiments of the present invention, the leaky feeder 20 the electromagnetic transmitter 30 and the electromagnetic receiver 40 may be not directly installed on the wind turbine 1, i.e. distanced from the wind turbine 1.

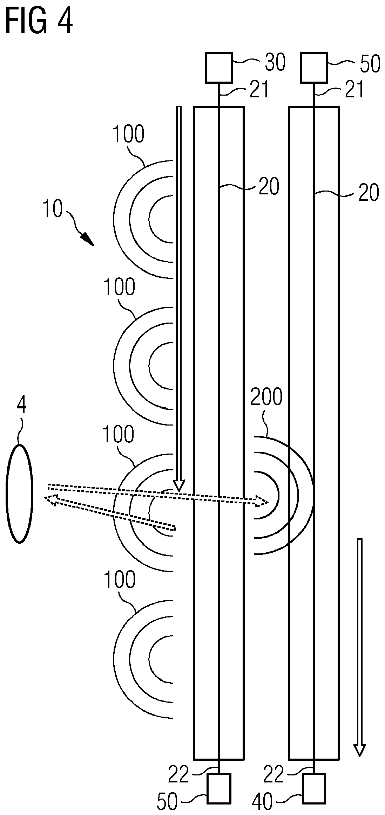

According to other embodiments of the present invention, a plurality of leaky feeders 20 may be used. As shown in **Figure 4****,** a second embodiment of the measurement and monitoring device 10 comprises two leaky feeders 20, parallel to each other, and extending between respective first ends 21 and second ends 22, respectively adjacent to each other. The two leaky feeders 20 are configured according to an antiparallel configuration, where a first leaky feeder 20 extends between:
an electromagnetic transmitter 30 connected to the first end 21, and
a final resistance 50 connected to the second end 22; while a second leaky feeder 20 extends between:
   a final resistance 50 connected to the first end 21, and
   an electromagnetic receiver 40 connected to the second end 22.

In such embodiment, one first leaky feeder 20, connected to the electromagnetic transmitter 30, is dedicated for the transmission of the first electromagnetic signal 100, while another second leaky feeder 20, connected to the electromagnetic receiver 40, is dedicated for receiving the first electromagnetic signal 200.

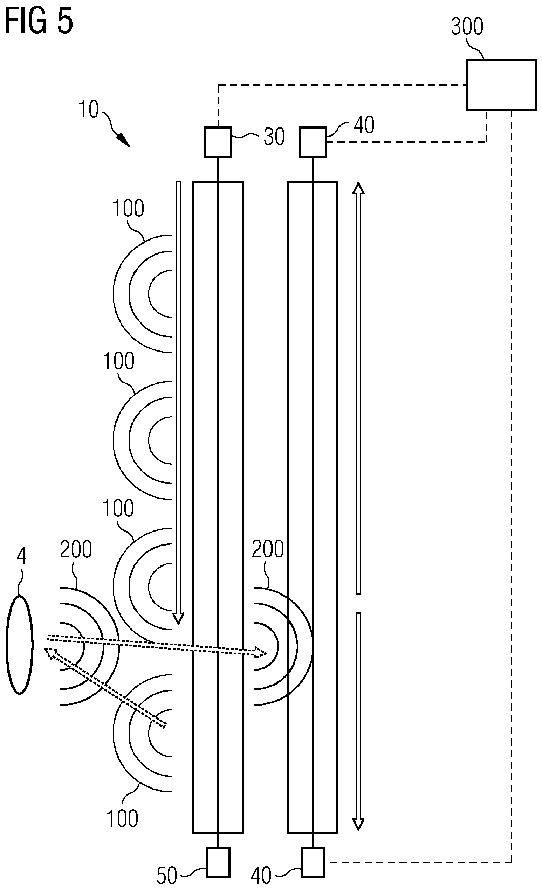

**Figure 5** shows a third embodiment of the measurement and monitoring device 10, which, similarly to the embodiment of figure 4, comprises two leaky feeders 20. The third embodiment differs from the second embodiment in that a first leaky feeder 20 extends between:
- an electromagnetic transmitter 30 connected to the first end 21, and
- a final resistance 50 connected to the second end 22; while a second leaky feeder 20 extends between two electromagnetic receivers 40 respectively connected to the first end 21 and the second end 22. The usage of two receivers permits to derive phase/time information which may be used, for example, to determine the position of one blade 4 with reference to vertical yaw axis Z.

According to other embodiments of the present invention (not shown, the measurement and monitoring device 10 comprises a plurality of leaky feeders 20 with more than two leaky feeders 20. Such plurality of leaky feeders 20 comprising a first and a second group of leaky feeders 20 respectively connected to one or more electromagnetic transmitters 30 and to one or more electromagnetic receivers 40. Each of the plurality of leaky feeders 20 may be conveniently geometrically configured for optimally following the trajectories of the target objects or of a plurality of target objects.

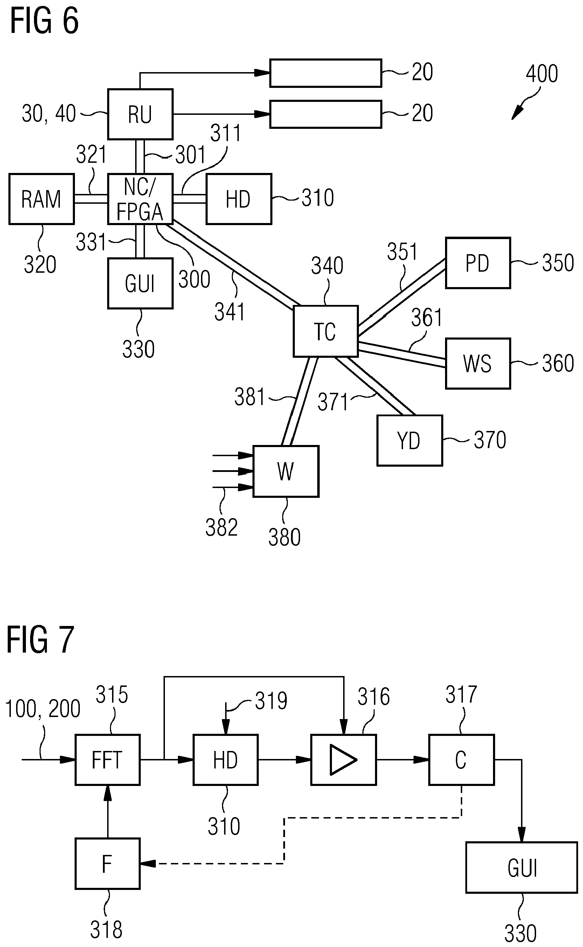

**Figure 6** shows a hardware circuit 400 included in the wind turbine 1. The hardware circuit 400 includes the processing unit 300. The processing unit 300 may be a numerical control (NC) unit or a Field Programmable Gate Array (FPGA). A bus connection 301 is provided between the processing unit 300 and the electromagnetic transmitter(s) 30 and the electromagnetic receiver(s) 40. Through the bus connection 301 the processing unit 300 receives the first electromagnetic signal 100 and the second electromagnetic signal 200. The hardware circuit 400 further includes a storage unit 310, a random access module (RAM) 320, a graphical user interface 330 and a turbine control system 340, which are all connected to the processing unit 300 via respective bus connections 311, 321, 331, 341. The storage unit 310 is used to store data sent by the processing unit 300, including the first electromagnetic signal 100 and the second electromagnetic signal 200. The graphical user interface 330 is used to display data or warning sent by the processing unit 300. The turbine control system 340 is connected, through respective bus connections 351, 361, 371, 381, to:
a pitch drive 350 to pitch the blades 4 about the respective pitch axes X,
a wind sensor 360 for measuring the speed of the wind hitting the blades 4,
a yawing drive 370 to command the position of the nacelle 3 about the yaw axis Z, and
a weather information unit 380 receiving a plurality of information 382 from the environment, for example temperature, pressure, weather forecast, etc.

Information 319 from any of the pitch drive 350, the wind sensor 360, the yawing drive 370 and the weather information unit 380 can also be sent and stored in the storage unit 310. The turbine control system 340, the pitch drive 350, the wind sensor 360, the yawing drive 370 and the weather information unit 380 are conventional and not specific of the present invention and therefore not described in further detail.

The system can be cost optimized by only having the minimal configuration needed for RF and signal conditioning of the relevant signals, the analyses of the signal being made remotely.

**Figure 7** shows a block diagram describing operative relations between components of the hardware 400. A "block" in figure 7 can be implemented as one or more modules that carry out these operative relations. These modules are logic circuits and/or programmable logic circuits configured and arranged in the hardware 400 for implementing these operative relations, as detailed in the following. The processing unit 300 includes a FFT ("Fast Fourier Transform") module 315 receiving as input the raw data corresponding to the first electromagnetic signal 100 and/or the second electromagnetic signal 200. The FFT module 315 generates an output which represents the spectral information in the frequency domain of the raw measured data which are provided as input to the FFT module 315. The output data generated by FFT module 315 are stored in the storage unit 310 which may receive also further information 319 from any of the pitch drive 350, the wind sensor 360, the yawing drive 370 and the weather information unit 380. The processing unit 300 further includes a comparator 316 for comparing the output data generated by FFT module 315 with analogous data previously stored in the storage unit 310. The comparator 316 may for example generate a difference between actual and previously stored data. The processing unit 300 further includes an analysis module 317, which searches for deviations in the data provided by the comparator 316, i.e. deviations between data generated by FFT module 315 with analogous data previously stored in the storage unit 310. In particular, deviations may be searched in the frequency domain of the second electromagnetic signal 200. Deviations detected by the analysis module 317 reveals changes in the properties of the blade 4, for example in the structural properties of the blade 4. For example, deviations detected by the analysis module 317 may reveal a faulty condition in one of the blade 4, which may be for example a crack in the blade 4. Such crack may be caused by the impact with a lightening or a bird or other external object. The analysis module 317 generates an output which is sent to the graphical user interface 330 for being displayed or printed. The output generated by the analysis module 317 may include a warning. The processing unit 300 may further includes filter functions 318 to be connected to the FFT module 315 for filtering the spectral information generated by the FFT module 315. The filter functions 318 may be adjusted depending on the output of the analysis module 317. According to other embodiments of the present invention, in addition or as an alternative to the FFT module 315, a signal processing module may be implemented for frequency domain and/or time domain analyses. According to such embodiments, in addition or as an alternative to the spectral information generated by the FFT module, amplitude information generated by a signal processing module operating in the time domain may be generated and monitored.

A plurality of radar techniques may be used for determining the desired information about the blade 4, whose properties are to be detected. For example UWB (Ultra-Wide Band) or Pulse or FMCW (Frequency-Modulated Continuous Wave) radar may be implemented. Additional SAR (Synthetic Aperture Radar) and ISAR (Inverse Synthetic Aperture Radar) techniques may be used. Analyses in the time-domain versus amplitude as well as the Doppler shift (frequency domain) changes are to be used. A preferred Software Defined Radar which switches dynamically between the modulation schemes and a dynamical adjustment of the output power is to be used. These adjustments are depending on the position of the rotor 5 and on the rotational speed and bending of the blades 4, as well as optional parameters from the main wind turbine controller.

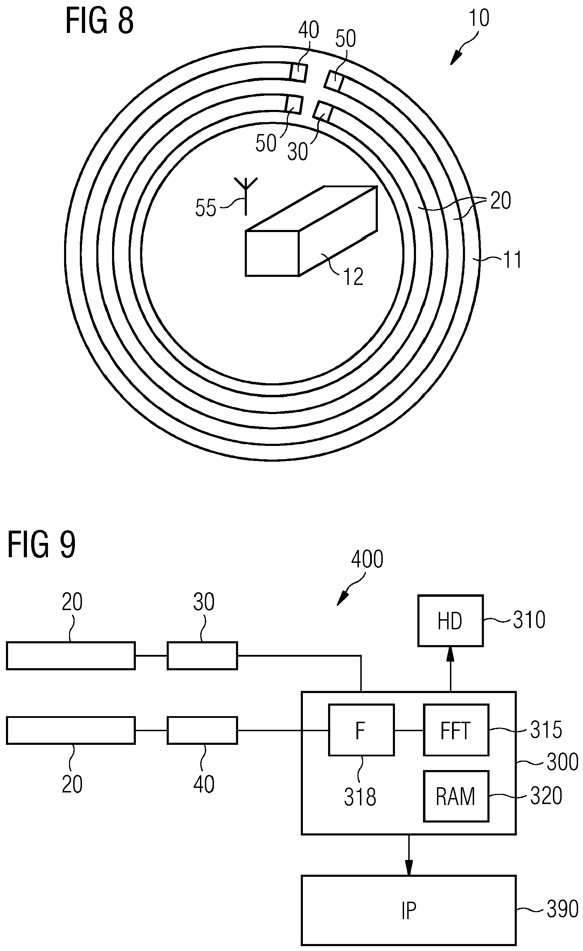

**Figure 8** shows a fourth embodiment of a measurement and monitoring device 10 not used in a wind turbine. Such embodiment comprises an arrangement of two leaky feeders 20 in an antiparallel configuration, like that of the embodiment of figure 4. The two leaky feeders 20 are arranged on an annular support 11 and forming two complete concentric circles covering approximately 360 degrees on a plane. The leaky feeder 20 connected to the transmitter 30 is arranged on the annular support 11 in a circle having a smaller diameter than the circle formed by the leaky feeder 20 connected to the receiver 40. The measurement and monitoring device 10 of the present embodiment may be used for analysing an object 12 moving towards and/or through the circles formed by the leaky feeders 20. Alternatively, according to other embodiments of the present invention (not shown), the same purpose could be achieved by arranging only one leaky feeder 20 on the support 11, shaped in one circle covering approximately 360 degrees on a plane. Based on different material properties of the object 12 a radar signal sent through the leaky feeder(s) 20 on the annular support 11 is reflected back as a second electromagnetic signal 200 depending on such properties. Metallic elements or moving parts inside the object 12 can be identified. An advanced image processing can be done from raw data, which offers the possibility for medical analysis of a human body. Such embodiment could therefore be used as an alternative to security scans or MRI (Magnetic Resonance Imaging). Optionally, a receiving antenna 55 providing single point transmission source may be provided inside the circles formed by the leaky feeders 20. The receiving antenna 55 may be positioned in the centre or off centre. According to other embodiments of the present invention (not shown), the leaky feeder 20 connected to the transmitter 30 is arranged on the annular support 11 in a circle having a bigger diameter than the circle formed by the leaky feeder 20 connected to the receiver 40 and a transmitting antenna providing single point transmission source is provided inside the circles formed by the leaky feeders 20.

**Figure 9** shows an embodiment of a hardware circuit 400 for manging the measurement and monitoring device 10 of figure 8. Similarly to the embodiment of figure 6, the hardware circuit 400 includes the processing unit 300. The processing unit 300 may be a numerical control (NC) unit or a Field Programmable Gate Array (FPGA). The processing unit 300 includes a FFT ("Fast Fourier Transform") module 315, a random access module (RAM) 320 and filter functions 318 to be connected to the FFT module 315 for filtering the spectral information generated by the FFT module 315. The processing unit 300 is connected to the electromagnetic transmitter(s) 30 and the electromagnetic receiver(s) 40. The electromagnetic receiver(s) 40 are directly connected to the filter functions 318 in order to transmit second electromagnetic signal 200 as input to the filter functions 318. The processing unit 300 is further connected to a storage unit 310 and to an advanced image processing module 390. According to other embodiments of the present invention, in addition or as an alternative to the FFT module 315, a signal processing module may be implemented for frequency domain and/or time domain analyses.

## Claims

1. Measurement and monitoring device (10) comprising:
at least one leaky feeder (20),
at least one electromagnetic transmitter (30) connected to the least one leaky feeder (20) for transmitting a first electromagnetic signal (100) along the least one leaky feeder (20) towards a target object (4, 12),
at least one electromagnetic receiver (40) connected to the least one leaky feeder (20) for receiving from the at least one leaky feeder (20) a second electromagnetic signal (200), said second electromagnetic signal (200) being reflected from the target object when the first electromagnetic signal (100) hits the target object (4, 12),
a hardware circuit (400) including:
a processing unit (300) connected to the electromagnetic transmitter (30) and the electromagnetic receiver (40) and configured to analyse said first electromagnetic signal (100) and said second electromagnetic signal (200) for determining properties of the target object (4, 12),
a signal processing module (315) receiving as input the first electromagnetic signal (100) and/or the second electromagnetic signal (200) for generating a spectral information in the frequency and/or time domain of the first electromagnetic signal (100) and/or the second electromagnetic signal (200),
a storage unit (310) connected to the processing unit (300) .

2. Measurement and monitoring device (10) according to claim 1, wherein the hardware circuit (400) includes an analysis module (317) configured for searching for deviations between data generated by the FFT module (315) and data previously stored in the storage unit (310).

3. Measurement and monitoring device (10) according to claim 1 or 2, wherein any of the FFT module (315) and the analysis module (317) are integrated in the processing unit (300) .

4. Wind turbine (1) including a measurement and monitoring device (10) according to any of the claims 1 to 3, the target object being a rotatable blade (4) of the wind turbine (1).

5. Security scanner including a measurement and monitoring device (10) according to any of the claims 1 to 3.

6. Magnetic resonance imaging apparatus including a measurement and monitoring device (10) according to any of the claims 1 to 3, the measurement and monitoring device (10) including an advanced image processing module (390) connected to the processing unit (300).

7. Method for monitoring a blade (4) of a wind turbine (1), the method comprising the steps of:
providing at least one leaky feeder (20) in an area comprising a wind turbine (1),
transmitting a first electromagnetic signal (100) along the at least one leaky feeder (20) towards the blade (4),
measuring a second electromagnetic signal (200) received from the at least one leaky feeder (20), said second electromagnetic signal (200) being reflected from the target object when the first electromagnetic signal (100) impinges the blade (4),
generating a spectral and/or amplitude information in the frequency and/or the time domain of any of the first electromagnetic signal (100) and the second electromagnetic signal (200),
storing the spectral and/or amplitude information,
monitoring the spectral and/or amplitude information over time and associating deviations in the spectral information to changes in properties of the blade (4).

8. Method according to claim 7, wherein deviations in the spectral information are associated to changes in the structural properties of the blade (4).
